# EUROPEAN PATENT APPLICATION

(11) **EP 4 570 404 A1**
(43) Date of publication of application: **18.06.2025**
(21) Application number: 24215842.6
(22) Date of filing: 27.11.2024
(51) Int. Cl.: B23C 5/22

(54) **PRESSING MEMBER, TOOL BODY AND CUTTING TOOL**

(30) Priority: 30.11.2023 JP 2023202827
(71) Applicant: Tungaloy Corporation, Iwaki-shi, Fukushima 970-1144 (JP)
(72) Inventor: ASO, Takahiro, Iwaki-shi, Fukushima, 9701144 (JP); SAJI, Ryuichi, Iwaki-shi, Fukushima, 9701144 (JP)
(74) Representative: Vossius & Partner Patentanwälte Rechtsanwälte mbB

(57) **Abstract**

A pressing member is configured to be inserted into a pocket of a tool body for pressing and fixing a cutting insert placed in a mounting part of the pocket onto a mounting surface of the mounting part. The pressing member includes a wedge part having a contacting surface that comes into contact with an inner surface of the pocket, and a pressing surface that is in contact with the cutting insert. The pressing surface is formed so as to gradually come close to the contacting surface in an insertion direction into the pocket. The pressing member also includes a pressure-receiving part that is pushed into the pocket in the insertion direction by a fastening component that is screwed into the pocket.

## Description

### Background

### Field

The present invention relates to a pressing member, a tool body and a cutting tool.

### Description of Related Art

Cutting tools, such as indexable cutters, have a plurality of cutting inserts radially mounted to the leading end of a tool body. Each of such cutting inserts is fixed in a pocket formed at the leading end of the tool body by means of a pressing member (see, for example, JP6860866 B, WO2023/058593 and JP2008-526535 A).

The more cutting inserts mounted to the cutting tool, the higher machining efficiency achieved by the cutting tool. Attempts have accordingly been made to make cutting inserts thinner and to thereby increase the number of cutting inserts mounted to the cutting tool. Making cutting inserts thinner also leads to a reduced size of the cutting tool itself.

However, pressing members used for the fixation of the cutting inserts occupy space at the leading end of the tool body, and accordingly, even when the cutting inserts are made thinner, restriction is still imposed on the attempts to increase the number of cutting inserts mounted and to reduce the size of the tool body. Further improvements are therefore desired for increasing the number of cutting inserts mounted and reducing the size of the tool body.

### Summary

The present invention has been made in view of the above-described circumstances, and an object of the present invention is to provide a pressing member, a tool body and a cutting tool, capable of increasing the number of cutting elements mounted and reducing the size of the tool body.

A pressing member according to an aspect of the present invention is inserted into a pocket of a tool body for pressing and fixing a cutting element placed in a mounting part of the pocket onto a mounting surface of the mounting part, the pressing member including: a wedge part having a contacting surface that comes in contact with an inner surface of the pocket, and a pressing surface that is in contact with the cutting element, wherein the pressing surface is formed so as to gradually come close to the contacting surface in an insertion direction into the pocket; and a pressure-receiving part that is pushed into the pocket in the insertion direction by a fastening component that is screwed into the pocket.

According to the pressing member having the above-described structure, the wedge part is pushed into the pocket upon the pressure-receiving part being pushed by the fastening component. Such pressing member does not need to have a female thread portion for screw-engagement with a screw used for pushing the pressing member into the pocket, thereby leading to a reduction in the size of the pressing member. Further, such size reduction of the pressing member allows for an increase in the number of cutting elements mounted to the tool body and a reduction in the size of the tool body itself.

In a state where the cutting element is fixed, a contact position of the pressure-receiving part with the fastening component may be located at a position that is opposed to the cutting element relative to a position of an end surface of the cutting element in an insertion direction into the mounting part.

In a state where the cutting element is fixed, at least a portion of the pressure-receiving part may be enclosed, over the entire circumference, by an inner circumference of a retention hole which is formed as a further recess that continues to the pocket.

The thickest portion of the wedge part may have a thickness that is smaller than a diameter of the fastening component.

The wedge part may have a receiving recess for receiving at least a portion of the fastening component, and a rear-side wall surface of the receiving recess in the insertion direction may be configured as a withdrawal surface that is pressed by the fastening component when the fastening component is loosened from the pocket.

A front-side wall surface of the receiving recess in the insertion direction may be configured as a pushing surface that is pressed, along with the pressure-receiving part, by the fastening component.

The wedge part may have outwardly protruding projections formed on both sides of the wedge part.

The projections may be configured so that the projections do not interfere with the pocket in a state where the cutting element is fixed, and so that the projections may come into contact with the pocket during removal of the cutting element.

A tool body according to an aspect of the present invention has: the above-described pressing member; a base having a plurality of pockets into which the pressing member is inserted, the plurality of pockets being formed so as to be spaced apart in a circumferential direction; and a fastening component that is screwed into each of the pockets, wherein each of the pockets has a mounting part in which a cutting element is placed, and wherein the cutting element placed in the mounting part is pressed and fixed to a mounting surface of the mounting part, when the pressing member inserted into the pocket is pressed in an insertion direction into the pocket by the fastening component screwed into the pocket.

A cutting tool according to an aspect of the present invention includes:
the above-described tool body; and a cutting element that is placed in the mounting part of the pocket formed in the base of the tool body.

### Brief Description of Drawings

Fig. 1 is a perspective view of a cutting tool according to an embodiment of the present invention.
Fig. 2 is a perspective view of a pocket portion of a cutting tool in which a cutting insert is mounted.
Fig. 3 is a cross-sectional view of a pocket portion of a cutting tool in which a cutting insert is mounted.
Fig. 4 is a perspective view of a pocket portion formed in a base of a tool body.
Fig. 5 is a perspective view of a pressing member and a cutting insert, with a fastening component received in a receiving recess.
Fig. 6 is a perspective view of a pressing member and a fastening component.
Fig. 7 is a perspective view of a wedge part of a pressing member when viewed from a pressing surface side.
Fig. 8 is a perspective view of a pressing member when viewed from a pressure-receiving part side.
Fig. 9 is a side view of a pressing member.
Fig. 10 is a top view of a pressing member.
Fig. 11 is a rear view of a pressing member.

### Detailed Description

Embodiments of the present invention will now be described in detail below, with reference to the attached drawings.

### Cutting Tool

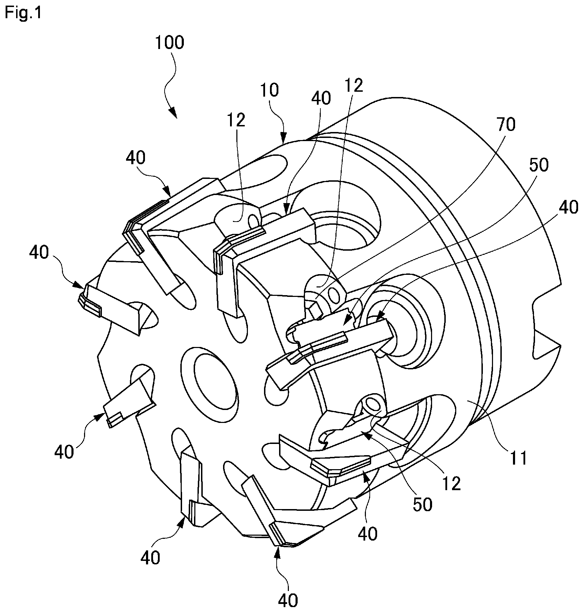

As shown in Fig. 1, a cutting tool 100 according to this embodiment has a tool body 10 and cutting inserts 40. The tool body 10 includes pressing members 50 and fastening components 70.

In the cutting tool 100, a plurality of cutting inserts 40 is mounted to the leading end of the tool body 10, and the cutting inserts 40 are radially arranged with a space in the circumferential direction. The cutting tool 100 is a milling tool, such as an indexable cutter, and it cuts, while rotating, a workpiece with the cutting inserts 40 at the leading end of the tool body 10. This embodiment describes an example in which the cutting inserts 40 serve as cutting elements mounted to the tool body 10, but the present invention also includes embodiments in which a cartridge having cutting inserts 40 incorporated therein is used as a cutting element.

### Tool Body

The tool body 10 has a base 11 which is generally cylindrical in shape. The base 11 is attached to a rotation shaft of a machine tool, such as a machining center.

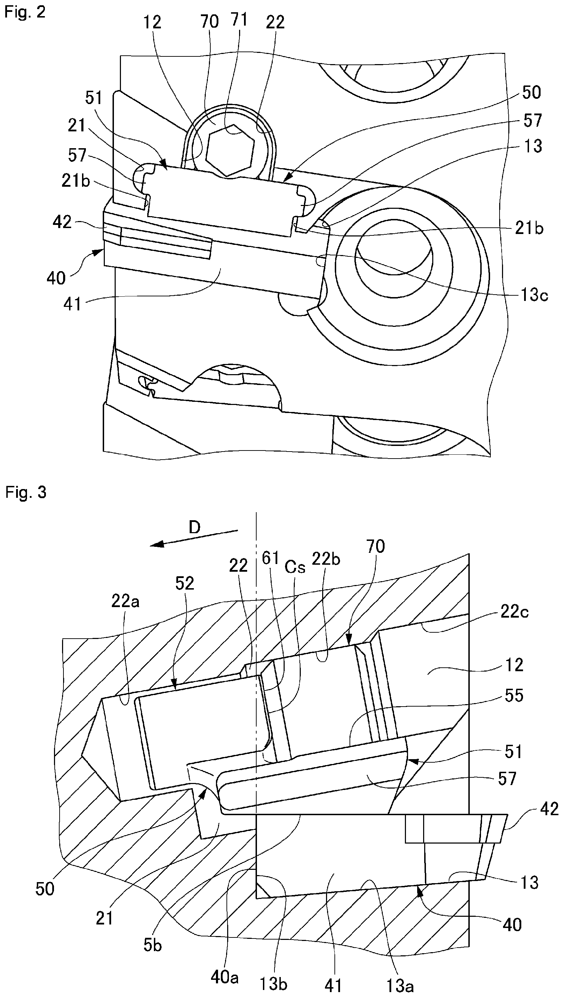

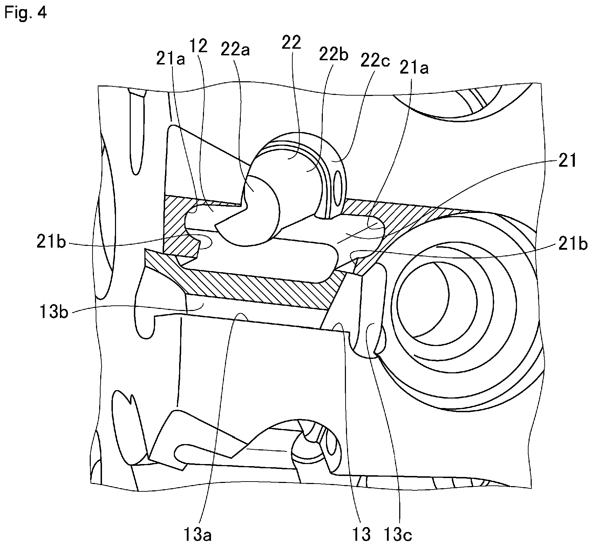

As shown in Figs. 2-4, the base 11 of the tool body 10 has a plurality of pockets 12 formed at its leading end. A pressing member 50 and a fastening component 70 are placed in each pocket 12. The pocket 12 has a mounting part 13. The mounting part 13 may be formed in, for example, a groove shape or a recessed shape, and a cutting insert 40 is placed in the mounting part 13. Upon being placed in the mounting part 13, the cutting insert 40 is fixed by the pressing member 50 and the fastening component 70.

The mounting part 13 has a mounting surface 13a and a contact surface 13b. When a cutting insert 40 is received in the mounting part 13, the cutting insert 40 comes into contact with the mounting surface 13a and the contact surface 13b. The mounting part 13 is open at the leading end side of the base 11 and has a positioning surface 13c that is formed at the rear end side of the base 11.

The pockets 12 each have a wedge-receiving part 21 and a fastening hole 22. The wedge-receiving part 21 is formed on the mounting part 13 side in the pocket 12, while the fastening hole 22 is formed on a side opposite to the mounting part 13 with respect to the wedge-receiving part 21. The wedge-receiving part 21 and the fastening hole 22 are formed so as to be gradually inclined toward the mounting part 13 side in a direction heading to the radial center of the base 11 (i.e., a direction heading deep into the base 11) (see Fig. 3). The depth of the wedge-receiving part 21 is greater than that of the mounting part 13, and a retention hole 22a (described below) of the fastening hole 22 is formed so as to be deeper than the wedge-receiving part 21.

The wedge-receiving part 21 has a sliding surface 21a on a side opposite to the mounting part 13. The wedge-receiving part 21 also has a guide ridge 21b which is formed on each of the inner side surfaces on the mounting part 13 side and extends in the depth direction.

The fastening hole 22 is comprised of a retention hole 22a, a threaded hole 22b and an entrance hole 22c which are arranged in this order from the bottom, and the diameters of these holes gradually increase from the bottom (i.e., from the retention hole 22a to the entrance hole 22c). A female thread is formed on the inner surface of the threaded hole 22b.

The threaded hole 22b and the entrance hole 22c are each formed so that a portion of their circumference communicates with the wedge-receiving part 21. The retention hole 22a is formed so that a portion of its circumference communicates with the wedge-receiving part 21 on a side that continues to the threaded hole 22b.

### Cutting Insert

The cutting insert 40 has a metal base 41 and a cutting tip 42. The metal base 41 is formed in the shape of a rectangular plate and the cutting tip 42 is provided at a corner on the upper surface of the metal base 41. Such cutting tip 42 provided on the metal base 41 may be, for example, a cutting tip made of single-crystal diamond or a sintered body of diamond (PCD: polycrystalline diamond).

The cutting insert 40 is mounted to the mounting part 13 of the pocket 12 and such mounting starts from an end of the cutting insert 40 that is opposite to the cutting tip 42. The cutting insert 40 is gradually thickened toward the direction in which the cutting insert 40 is mounted to the mounting part 13.

### Pressing member

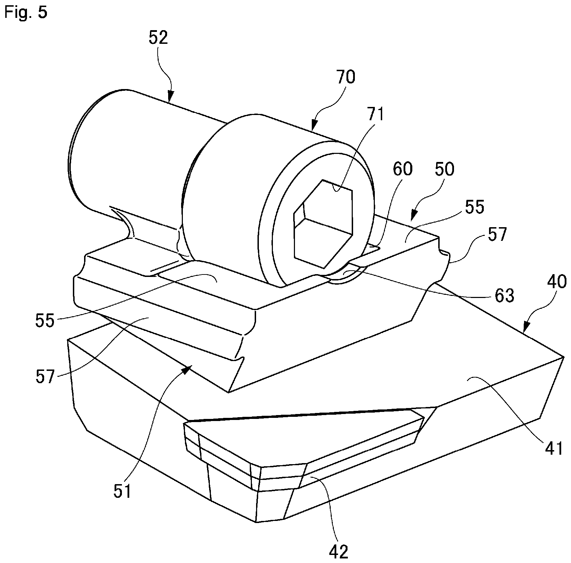

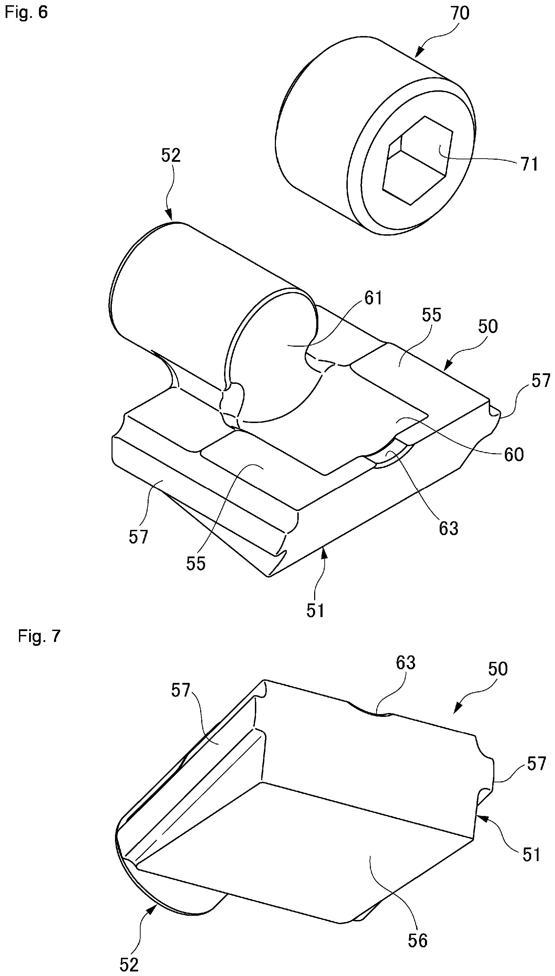

As illustrated in Figs. 5-11, the pressing member 50 serves as a member that is inserted into the pocket 12 of the base 11 of the tool body 10 so as to press and fix the cutting insert 40 that is placed in the mounting part 13 of the pocket 12 towards the mounting surface 13a of the mounting part 13.

The pressing member 50 has a wedge part 51 and a pressure-receiving part 52. Upon the pressing member 50 being inserted into the pocket 12, the wedge part 51 is inserted into the wedge-receiving part 21 and the pressure-receiving part 52 is inserted into the fastening hole 22.

The wedge part 51 has a contacting surface 55 and a pressing surface 56. The contacting surface 55 comes into contact with the sliding surface 21a of the wedge-receiving part 21, which is an inner surface of the pocket 12, and the pressing surface 56 is in contact with the cutting insert 40 placed in the mounting part 13. The wedge part 51 is formed in a wedge shape in which its thickness gradually decreases in the insertion direction D into the pocket 12 (see Fig. 3). Accordingly, in the wedge part 51, the pressing surface 56 is inclined relative to the contacting surface 55 in a manner so as to gradually come close to the contacting surface 55 in the insertion direction D into the pocket 12. The wedge part 51 has a thickest portion at its rear end in the insertion direction D, and the thickness of the thickest portion is set so as to be smaller than the diameter of the fastening component 70.

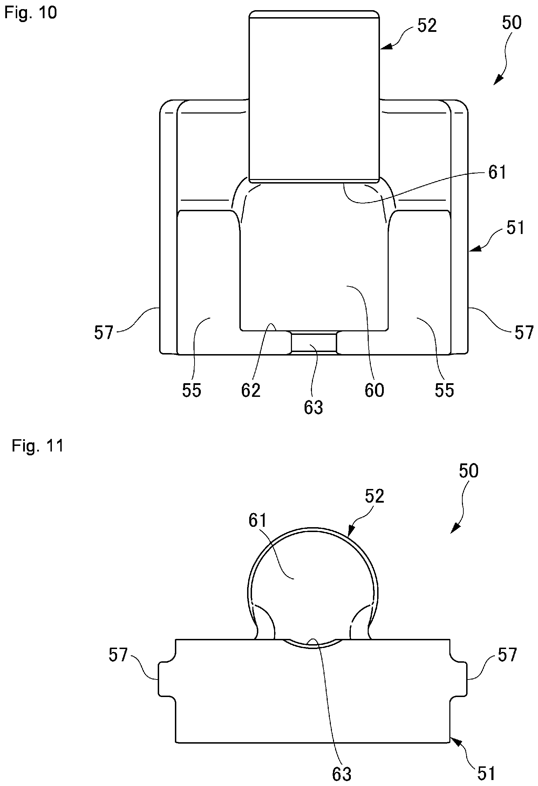

The wedge part 51 has projections 57 that protrude outward on both sides of the wedge part 51. The projections 57 are formed so as to be parallel to the contacting surface 55 along the insertion direction D of the wedge part 51 into the pocket 12. The upper and lower corners of each projection 57 are formed so as to be recessed in a circular-arc shape (see Fig. 11). The upper and lower corners of the projections 57 may be formed in a tapered shape.

The pressure-receiving part 52 has a cylindrical shape and it is formed integrally with the contacting surface 55 side of the wedge part 51. The pressure-receiving part 52 is disposed on the front side of the wedge part 51 in the insertion direction D, and part of the pressure-receiving part 52 protrudes forward relative to the wedge part 51 in the insertion direction D. The center axis of the pressure-receiving part 52 is parallel to the contacting surface 55 of the wedge part 51.

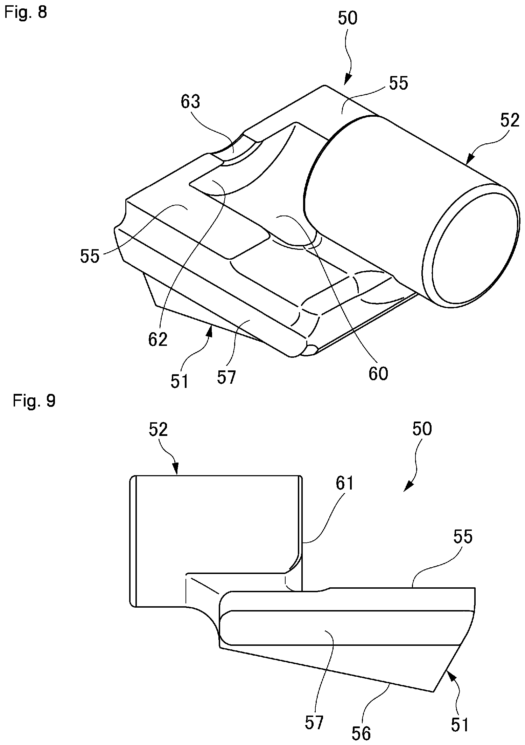

The pressing member 50 also has a receiving recess 60 formed in the wedge part 51. A portion of the fastening component 70 is received in the receiving recess 60. The receiving recess 60 is formed on the contacting surface 55 side of the wedge part 51 and recessed in a circular-arc shape in its cross-section. A front-side wall surface in the insertion direction D of the receiving recess 60 is configured so as to be flush with an end surface of the pressure-receiving part 52 and serves, together with such end surface of the pressure-receiving part 52, as a pushing surface 61. A rear-side wall surface in the insertion direction D of the receiving recess 60 serves as a withdrawal surface 62 (see Fig. 8). Additionally, a clearance recess 63 is formed at an upper edge of the rear-side wall in the insertion direction D of the receiving recess 60.

### Fastening Component

The fastening component 70 is received in the receiving recess 60 of the pressing member 50 and it may be, for example, a socket set screw having a male thread on its outer circumference. Such fastening component 70 has a tool hole 71 formed on its rear end surface so that a tool engages with the tool hole 71. The tool hole 71 is not limited to being a hexagonal hole engageable with a hexagonal wrench and it may have various shapes for engagement with various types of tools, such as a hole in the Torx shape. The fastening component 70 can be screw-engaged in the threaded hole 22b formed in the fastening hole 22 of the pocket 12.

The fastening component 70 has a larger diameter than that of the pressure-receiving part 52 of the pressing member 50 and, when the fastening component 70 is received in the receiving recess 60, the respective center axes of the fastening component 70 and the pressure-receiving part 52 coincide with each other. It should be noted, however, that the center axes of the fastening component 70 and the pressure-receiving part 52 may not necessarily coincide with each other. Further, in a state where the fastening component 70 is received in the receiving recess 60, the circumscribed circle of the tool hole 71 of the fastening component 70, being a trajectory of rotation of the tool hole 71, does not overlap with the rear-side wall in the insertion direction D of the receiving recess 60, which has the clearance recess 63 formed at its upper edge. With this configuration, when a tool is inserted into the tool hole 71, such tool does not interfere with the rear-side wall in the insertion direction D of the receiving recess 60. By forming the clearance recess 63 at the rear-side wall in the insertion direction D of the receiving recess 60 in this manner, the wedge part 51 of the pressing member 50 can be made even thinner, although such wedge part is otherwise difficult to make thinner due to interference with a tool.

### Fixation of Cutting Insert

An example of the process for mounting a cutting insert 40 into a pocket 12 provided at the base 11 of the tool body 10 will be described next.

First, a pressing member 50 is inserted into a pocket 12 of the base 11 of the tool body 10, with a fastening component 70 being received in the receiving recess 60 of the pressing member 50. More specifically, while the end of the pressure-receiving part 52 of the pressing member 50 is inserted into the retention hole 22a in the fastening hole 22 of the pocket 12, the wedge part 51 of the pressing member 50 is inserted into the wedge-receiving part 21 of the pocket 12, and the fastening component 70 is loosely screw-engaged in the threaded hole 22b. In this state, the projections 57 on both sides of the wedge part 51 are stopped by the guide ridges 21b of the wedge-receiving part 21, so that the pressing member 50 is maintained in a state of being placed in the pocket 12.

Next, a cutting insert 40 is inserted and placed in the mounting part 13 of the pocket 12. With this insertion, the cutting insert 40 is placed in contact with the mounting surface 13a, contact surface 13b and positioning surface 13c. The cutting insert 40 may be inserted and placed in the mounting part 13 of the pocket 12 before the pressing member 50 is inserted into the pocket 12.

After that, a tool is inserted into the tool hole 71 of the fastening component 70 that is received in the receiving recess 60 of the pressing member 50, and the fastening component 70 is screwed into the threaded hole 22b formed in the fastening hole 22 of the pocket 12.

As the fastening component 70 is screwed into the threaded hole 22b in this way, the fastening component 70 moves toward the back of the fastening hole 22. As a result, the pushing surface 61 of the pressing member 50 is pressed by the fastening component 70, and the pressing member 50 is pushed into the back of the pocket 12. Upon this movement of the pressing member 50, the wedge part 51 of the pressing member 50 also moves to the back of the wedge-receiving part 21, while allowing the contacting surface 55 of the wedge part 51 to slide on the sliding surface 21a of the wedge-receiving part 21, so that the pressing surface 56 moves in a direction approaching the cutting insert 40, resulting in the pressing surface 56 coming into contact with the metal base 41 of the cutting insert 40.

When the fastening component 70 is further screwed into the threaded hole 22b, the metal base 41 of the cutting insert 40 is pressed by the pressing surface 56 of the wedge part 51 of the pressing member 50. With this pressing, the cutting insert 40 is tightly sandwiched and fixed between the mounting surface 13a of the mounting part 13 and the pressing surface 56 of the wedge part 51 of the pressing member 50. As a result, the cutting insert 40 is fixed in the pocket 12 of the base 11 of the tool body 10.

Since the pressing member 50 has the structure of being pushed into the pocket 12 via the fastening component 70 as described above, the pressing member 50 does not need to have a female thread portion with which a screw for pushing the pressing member 50 into the pocket 12 is screw-engaged, and this means that the size of the pressing member 50 can be reduced.

Furthermore, in a state where the cutting insert 40 is fixed by the pressing member 50, the contact position Cs between the pressure-receiving part 52 of the pressing member 50 and the fastening component 70 is located at a position that is opposed to the cutting insert 40 on a rear side relative to an end surface 40a (indicated by the dash-dot-dot line in Fig. 3) of the cutting insert 40 in the insertion direction D into the mounting part 13 (see Fig. 3). This configuration allows for suppression of the bending moment which may be generated when the pressure-receiving part 52 is pressed by the fastening component 70. In other words, the pressing member 50 employs the design for suppression of the bending moment occurring upon fixation of the cutting insert 40, based on a consideration of stress relaxation. Accordingly, the pressing member 50 can be reduced in size while still ensuring sufficient strength.

In a state where the cutting insert 40 is fixed by the pressing member 50, a portion of the end of the pressure-receiving part 52 is inserted into the retention hole 22a of the fastening hole 22 of the pocket 12. In other words, a portion of the end of the pressure-receiving part 52 is enclosed, over the entire circumference thereof, by the inner circumference of the retention hole 22a of the pocket 12 (see Fig. 3). This configuration allows for suppression of an inclination of the pressure-receiving part 52 that is pressed by the fastening component 70, and as a result, the pressing member 50 can be reduced in size while ensuring a sufficient pressing force being applied to the cutting insert 40 by the pressing surface 56 of the wedge part 51.

In a state where the cutting insert 40 is fixed by the pressing member 50, the projections 57 on both sides of the wedge part 51 are spaced away from the guide ridges 21b of the wedge-receiving part 21, i.e., the projections 57 do not come into contact with the pocket 12. Accordingly, there is no degradation in the pressing force applied to the cutting insert 40, caused by interference of the projections 57 with the pocket 12.

### Removal of Cutting Insert

An example of the process for removing the cutting insert 40 that has been fixed in the pocket 12 by means of the pressing member 50 will be described next.

For removing the cutting insert 40, the fastening component 70 is rotated in a reverse manner to the rotation that was made for fastening, by using the tool inserted in the tool hole 71. Upon this reverse rotation, the fastening component 70 that has been screwed into the threaded hole 22b formed in the fastening hole 22 of the pocket 12 is loosened and moves in the withdrawal direction, which is opposite to the insertion direction D.

Then, the loosened fastening component 70 presses the withdrawal surface 62 of the pressing member 50, and the pressing member 50 is pulled out from the pocket 12. With this movement, the pressing surface 56 of the wedge part 51 of the pressing member 50 moves away from the cutting insert 40, which releases the pressing applied by the pressing member 50 to the cutting insert 40. In this state, the cutting insert 40 placed in the mounting part 13 of the pocket 12 is grasped and then removed out of the mounting part 13.

Here, when the pressing member 50 is pulled out from the pocket 12 together with the fastening component 70, the projections 57 on both sides of the wedge part 51 are stopped via contact with the guide ridges 21b of the wedge-receiving part 21. In other words, in the removal of the cutting insert 40, the projections 57 formed on the wedge part 51 of the pressing member 50 come into contact with the guide ridges 21b of the pocket 12, so that the projections 57 are guided by the guide ridges 21b, which prevents the fastening component 70 from falling off the receiving recess 60 due to inclination of the pressing member 50. Accordingly, the pressing member 50 is smoothly extracted from the pocket 12 together with the fastening component 70. It should be noted here that, in some cases, the projections 57 formed on the wedge part 51 do not come into contact with the guide ridges 21b of the pocket 12, and this depends on the position of the pressing member 50 when it is loosened with a tool. The cutting insert 40 may also be removed and replaced, while having the pressing member 50 and the fastening component 70 in a loosened state, without completely removing them out of the pocket 12.

As described above, the pressing member 50 according to this embodiment has a structure wherein the wedge part 51 of the pressing member 50 is pushed into the pocket 12 upon the pressure-receiving part 52 of the pressing member 50 being pushed by the fastening component 70. Thus, the structure can eliminate the need to provide the pressing member 50 with a female thread portion for screw-engagement with a screw for pushing the pressing member 50 into the pocket 12, leading to a reduction in size of the pressing member 50. Since the pressing member 50 can be reduced in size as stated above, the number of the cutting inserts 40 mounted to the tool body 11 can be increased and the size of the tool body 11 itself can be reduced.

Moreover, the pressing member 50 is configured so that the thickness of the thickest portion of the wedge part 51 is smaller than the diameter of the fastening component 70. In other words, the pressing member 50 can be further reduced in size owing to a reduced thickness of the wedge part 51.

The present invention provides a pressing member, a tool body, and a cutting tool, achieving an increase in the number of cutting elements mounted and a reduction in size of the tool body.

## Claims

1. A pressing member that is inserted into a pocket of a tool body for pressing and fixing a cutting element placed in a mounting part of the pocket onto a mounting surface of the mounting part, the pressing member comprising:
a wedge part having a contacting surface that comes into contact with an inner surface of the pocket, and a pressing surface that is in contact with the cutting element, wherein the pressing surface is formed so as to gradually come close to the contacting surface in an insertion direction into the pocket; and
a pressure-receiving part that is pushed into the pocket in the insertion direction by a fastening component that is screwed into the pocket.

2. The pressing member according to claim 1, wherein, in a state where the cutting element is fixed, a contact position of the pressure-receiving part with the fastening component is located at a position that is opposed to the cutting element relative to a position of an end surface of the cutting element in an insertion direction into the mounting part.

3. The pressing member according to claim 1 or 2, wherein, in a state where the cutting element is fixed, at least a portion of the pressure-receiving part is enclosed, over an entire circumference, by an inner circumference of a retention hole which is formed as a further recess that continues to the pocket.

4. The pressing member according to claim 1, 2, or 3, wherein a thickest portion of the wedge part has a thickness smaller than a diameter of the fastening component.

5. The pressing member according to any one of claims 1 to 4, wherein the wedge part has a receiving recess for receiving at least a portion of the fastening component, and
wherein a wall surface of the receiving recess at a rear side in the insertion direction is configured as a withdrawal surface that is pressed by the fastening component when the fastening component is loosened from the pocket.

6. The pressing member according to claim 5, wherein a wall surface of the receiving recess at a front side in the insertion direction is configured as a pushing surface that is pressed, along with the pressure-receiving part, by the fastening component.

7. The pressing member according to any one of claims 1 to 6, wherein the wedge part has outwardly protruding projections formed on both sides of the wedge part.

8. The pressing member according to claim 7, wherein the projections do not interfere with the pocket in a state where the cutting element is fixed, and
wherein the projections may come into contact with the pocket during removal of the cutting element.

9. A tool body comprising:
a pressing member according to any one of claims 1 to 8;
a base having a plurality of pockets into which the pressing member is inserted, the plurality of pockets being formed so as to be spaced apart in a circumferential direction; and
a fastening component that is screwed into each of the pockets,
wherein each of the pockets has a mounting part in which a cutting element is placed, and
wherein the cutting element placed in the mounting part is pressed and fixed to a mounting surface of the mounting part when the pressing member inserted into the pocket is pressed in an insertion direction into the pocket by the fastening component screwed into the pocket.

10. A cutting tool comprising:
a tool body according to claim 9; and
a cutting element placed in the mounting part of the pocket formed in the base of the tool body.
